# EUROPEAN PATENT SPECIFICATION

(11) **EP 3 331 121 B1**
(45) Date of publication and mention of the grant of the patent: **02.09.2020**
(21) Application number: 16202197.6
(22) Date of filing: 05.12.2016
(51) Int. Cl.: B60L 58/10

(54) **CONTROL UNIT FOR A BATTERY SYSTEM**
STEUERUNGSEINHEIT FÜR EIN BATTERIESYSTEM
UNITÉ DE COMMANDE POUR UN SYSTÈME DE BATTERIE

(43) Date of publication of application: 06.06.2018
(73) Proprietor: Samsung SDI Co., Ltd., Giheung-gu Yongin-si, Gyeonggi-do 17084 (KR)
(72) Inventor: HOFER, Maximilian, 8230 Hartberg (AT)
(74) Representative: Gulde & Partner

(56) References cited:
- EP-A1- 3 079 222
- DE-U1- 29 905 684
- US-A1- 2007 001 804
- US-A1- 2009 146 610
- US-A1- 2010 271 172

## Description

### Field of the Invention

The present invention relates to a control unit for a battery system, to a battery system comprising such a control unit and to a startup method for such a control unit for a battery system.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle. One or more battery modules are mechanically and electrically integrated, equipped with a thermal management system and set up for communication with one or more electrical consumers in order to form a battery system.

For meeting the dynamic power demands of various electrical consumers connected to the battery system a static control of battery power output and charging is not sufficient. Thus, steady or intermittent exchange of information between the battery system and the controllers of the electrical consumers is required. This information includes the battery systems actual state of charge (SoC), potential electrical performance, charging ability and internal resistance as well as actual or predicted power demands or surpluses of the consumers.

For monitoring, controlling and/or setting of the aforementioned information a battery system usually comprises a battery management unit (BMU) and/or a battery management system (BMS). Such control units may be an integral part of the battery system and disposed within a common housing or may be part of a remote control unit communicating with the battery system via a suitable communication bus. In both cases, the control unit communicates with the electrical consumers via a suitable communication bus, e.g. a CAN or SPI interface.

The BMS/BMU is usually coupled to the controller of one or more electrical consumers as well as to each of the battery modules of the battery system. Usually each battery module comprises a cell supervision circuit (CSC) that is configured to maintain the communication with the BMS/BMU and with other battery modules. The CSC may be further configured to monitor the cell voltages of some or each of the battery module's battery cells and to actively or passively balance the voltages of the individual battery cells within the module.

The service life of the aforementioned control units, i.e. BMS; BMU and CSC, might exceed the service life of the controlled battery cell(s). In principle, control units that were introduced to the market by an original equipment manufacturer (OEM) might thus be reused with replacement battery cells once the original cells quit functioning. However, as control units and battery cells are perfectly coordinated such reuse poses high risks for battery malfunctions. And as malfunctioning battery cells might lead to fire, explosions and/or release of harmful substances, OEMs are interested in controlling the reuse of battery control units. Z Background art can be found in US2007/001804 A1, US 2010/271172 A1, US 2009/146610 A, EP 3 079 222 A1 or DE 299 05 684 U1.

It is thus an object of the present invention to provide a control unit for a battery system that allows for controlling its reuse after an OEM has introduced it to the market.

### Summary of Invention

One or more of the drawbacks of the prior art could be avoided or at least reduced by means of the present invention. In particular, according to a first aspect of the invention a control unit for a battery system is provided. The control unit comprises a power input for an operation voltage of the control unit that is provided by at least one battery cell of the battery system, a control module that is configured for performing at least control function with respect to the at least one battery cell, and a startup module connected between the power input and the control module. The startup module comprises a data input configured for receiving an activation key and a non-volatile memory element that is storing a security identifier. The startup module further comprises a verification circuit that is connected to the data input and the non-volatile memory element and that is configured for validating an input activation key with respect to the security identifier. The startup module further comprises an activation circuit that is connected to the verification circuit and that is configured for interconnecting the power input and the control module in response to the validation of the activation key.

In the context of the present invention, a control unit for a battery system can be one of a BMS, BMU or CSC and may further be an electronic circuit that is configured for controlling an individual battery cell. Usually a control unit comprises one or more integrated circuits (ICs) that are mounted on a suitable circuit carrier, e.g. a printed circuit board (PCB). A control unit according to the present invention is continuously powered by at least one battery cell that is controlled by the control unit, e.g. as a part of the battery system or the battery module that is controlled by the control unit. Preferably, the control unit is powered by the at least one battery cell during the whole service life of the battery system, battery module or battery cell. However, the control unit according to the invention is capable of being activated multiple times, wherein the activation of the control unit requires an input of an activation key and the validation of the input activation key with respect to the security identifier.

According to the present invention, the function of a battery system, battery module or battery cells depends on the control module performing at least one control function with respect to at least one battery cell of the battery system, battery module or battery cell. The control functions may comprise the measurement of cell voltages, cell currents, cell resistances or cell capacities and, for a plurality of battery cells, may further comprise the active or passive balancing of cell voltages or cell currents. Suitable circuit designs for performing one or more of these functions are known to the skilled person. In order to perform any of these control functions, the control module must be supplied with an operation voltage. According to the invention, the prerequisite for the control module being supplied with an operation voltage is the validation of an activation key that is input to the control unit, wherein the validation occurs with respect to a security identifier stored in the control unit. Preferably, the control module comprises means for detecting a voltage of at least one battery cell and/or the control module comprises means for balancing the voltages of a plurality of battery cells.

The non-volatile memory element is part of the startup module that is interconnected between the power input and the control module of the control unit. Preferably, the security identifier becomes stored in the non-volatile memory element during the assembly or during the testing of the control unit. In other words, the security key preferably becomes stored in the non-volatile memory element before an initial startup of the control unit, i.e. before an operation voltage is supplied to the control unit for the first time. According to a particularly preferred embodiment, the security identifier is hardware encoded in the startup module. In other words, the non-volatile memory element may be assembled rather than written. Exemplarily, the security key is encoded in the start up module using at least one fusebit, particularly preferred a non-readable fusebit. Then, the non-volatile memory element comprises the at least one fusebit. Alternatively, the non-volatile memory element is principally capable of being written and being read multiple times. The non-volatile memory element may then comprise a flash memory, an SRAM combined with a fusebit, a FeRAM, an MRAM or a phase-change memory. Further preferred, a write access of a non-volatile memory element that is principally capable of being written and read multiple times is disabled, after the security identifier has been written to the non-volatile memory element and before the control unit is powered up for the first time.

According to a preferred embodiment, the non-volatile memory element is configured for outputting the security identifier to the verification circuit in response to the operation voltage being applied to the startup module. In other words, the security identifier is output to the verification circuit once the operation voltage is supplied from the power input of the control unit to its startup module. Then, the security key is output from the non-volatile memory element almost immediately, i.e. within a predetermined time interval. Outputting the security key might comprise a read-out operation of a fusebit, a flash memory or an SRAM. Once the operation voltage is supplied from the power input of the control unit to its startup module, also the data input is ready for the input of an activation key. Particularly preferred, a user is prompted to input the activation key. The data input preferably comprises a GUI that allows a user to input the activation key. Alternatively preferred, the data input comprises an interface and the activation key can be input to the control unit via the interface.

Once the activation key is input in the control unit, particularly using the data input of the startup module, and the security identifier is output from the non-volatile memory element, the verification circuit receives the activation key as well as the security identifier. The verification circuit is configured to validate the activation key with respect to the security identifier. The activation key and the security identifier may each be represented by a data string or a data array of any size. In this case, the validation of the activation key preferably comprises the comparison of the activation key and the security identifier. The comparison may occur bitwise. The activation key is validated if a certain fraction of the activation key and the security identifier are equal to each other. Preferably this fraction is at least 50%, particularly preferred at least 75% and further preferred at least 95% of the size of the activation key. According to a further preferred embodiment, the security identifier is represented by a certain security algorithm. The activation key is then validated in that it is confirmed whether is fulfils the security algorithm. According to this embodiment, a plurality of different activation keys might be used to activate the control unit. Further preferred, the activation key is input to a hash function and the hash value of the activation key is compared to the security identifier. Once the activation key is validated with respect to the security identifier, the verification circuit outputs a verification signal to the activation circuit. The amplitude and/or the polarity of the verification signal might depend on whether or not the activation key was validated with respect to the security identifier. The verification signal might be continuously output from the verification circuit once the activation key is validated or might be output as a single burst.

According to a preferred embodiment of the control unit according to the invention, the verification circuit comprises an SRAM that is electrically connected to a first operation line providing a first operation voltage V_{DD} and to a second operation line providing a second operation voltage V_{SS}. The verification circuit further comprises a NOT gate, wherein an output node of the NOT gate is connected to an input of a first inverter that is interconnected between the first operation line and a data input of the SRAM. Further, a capacitor is interconnected between the data input of the SRAM and the second operation line. A second inverter is connected to a data output of the SRAM. Particularly preferred, the verification circuit further comprises a XNOR gate, wherein a first input of the XNOR gate is connected to the non-volatile memory element and wherein a second input of the XNOR gate is connected to the data input of the startup module. Further preferred, an output of the XNOR gate is connected to an input of the NOT gate. Depending on whether or not the activation key input to the XNOR gate equals the security identifier input to the XNOR gate, the output of the second inverter is either set high or low. Further, the output is sustained as long as the operation voltages are supplied to the activation circuit.

According to a preferred embodiment, the activation circuit comprises at least one differential amplifier configured for amplifying the data output of the verification circuit. The differential amplifier comprises an inverting input and a non-inverting input, wherein the inverting input is interconnected with the output of the verification circuit and wherein a reference voltage is input to the non-inverting input. The reference voltage may be derived from one of the first and the second operation voltages of the control unit, e.g. via a voltage divider and/or using a memory. The differential amplifier further comprises a first supply input and a second supply input, wherein the first and second operation voltage are supplied to the supply inputs, respectively. Further preferred, the differential amplifier is configured as an operational amplifier and comprises a feedback circuit, e.g. a negative feedback. Alternatively, the differential amplifier is configured as a comparator. Further preferred, the activation circuit of the control unit according to the invention comprises at least one switch element that is configured for interconnecting the power input and the control module in response to a specific output of the differential amplifier. Particularly preferred, the switch element is configured to be set conductive by a specific output of the amplifier, i.e. by an output with specific polarity. Particularly preferred, the switch element comprises at least one of a transistor, e.g. a BPT, a FET, JFET, MOSFET, IGBT or the like. Further preferred, the switch element comprises a loopback circuit that is configured for sustaining the conductive state of the switch element, once the switch element was set conductive for a predetermined time period. In response of receiving the verification signal, the activation circuit interconnects the power input of the control unit to the control module, i.e. provides an operation voltage to the control module.

Another aspect of the present invention relates to a battery system, comprising a control circuit according to the present invention as described above. The control unit is preferably part of at least one of a battery management system (BMS), a battery monitoring unit (BMU) or a cell supervision circuit (CSC) of the battery system. The battery system further comprises a plurality of battery cells and/or battery modules and may further comprise a cooling system.

Another aspect of the present invention relates to a startup method of a control unit for a battery system, wherein the control unit comprises a power input for an operation voltage provided by at least one battery cell, a control module configured for performing at least one control function with respect to the at least one battery cell and a startup module connected between the power input and the control module. The method according to the invention comprises the steps of writing a security identifier to a non-volatile memory element of the control unit; supplying an operation voltage of the control unit to the power input by at least one battery cell of the battery system; inputting an activation key to the control unit; validating the activation key with respect to the security identifier and interconnecting the power input and the control module in response to the validation of the activation key. Preferably, the method further comprises the step of setting a switch element in an activation circuit of the control unit conductive in response to the validation of the activation key.

The method may further comprise the step of performing at least one control function by the control module in response to the validation of the activation key. The control functions may comprise the measurement of cell voltages, cell currents, cell resistances or cell capacities and, for a plurality of battery cells, may further comprise the active or passive balancing of cell voltages or cell currents. In a preferred embodiment of the invention, the activation key input to the control module must equal the security identifier output from the non-volatile memory element for the control module to be supplied with the operation voltage. The method may further comprise the step of connecting at least one battery cell to the control unit for supplying the operation voltage of the control unit to the control unit.

Preferably, the storing of the security identifier in the non-volatile memory element occurs during assembling or testing of the control unit. In other words, the security identifier is stored in the non-volatile memory element before an initial startup of the control unit. The security identifier is preferably hardware encoded into the non-volatile memory element, e.g. by interconnecting a certain voltage level and an input of the non-volatile memory element using a fuse or antifuse. Alternatively, the security identifier is written to a non-volatile memory element that is in principle capable of being written and read multiple times, e.g. a flash memory, during testing of the control unit. Further preferred, the method comprises the step of disabling a write access of the non-volatile memory element after writing the security identifier to the non-volatile memory element.

According to a further preferred embodiment, the method of the invention further comprises the steps of: deactivating the control unit by ceasing the operation voltage supply to the power input and during a repeated startup repeating the steps of: supplying an operation voltage of the control unit to the power input by at least one battery cell of the battery system; inputting an activation key to the data input of the control unit; validating the activation key with respect to the security identifier and interconnecting the power input and the control module in response to the validation of the activation key during the repeated start up of the control unit for a battery system.

The method of the present invention may be performed multiple times for a controlled startup of a control unit for a battery system. Exemplarily, a first startup may be performed by the OEM after the first assembly of the control unit to at least one battery cell and a second startup may be performed by a licensee of the OEM that has the permission for refurbishing the battery system by replacing the original battery cells with replacement battery cells. For the second startup, the OEM may provide the license with an activation key that can be validated with respect to the security identifier that is written to the control unit only once by the OEM. The activation key provided to the licensee may be identical to the activation key initially used by the OEM or may be a different activation key that also fulfills a security algorithm, e.g. a hash function, that is saved to the control unit as a security identifier.

Further aspects of the present invention are disclosed in the dependent claims or the following description of the drawings.

### Brief Description of the Drawings

Features will become apparent to those of ordinary skill in the art by describing in detail exemplary embodiments with reference to the attached drawings in which:
- Fig. 1: schematically illustrates the workflow for the production of a battery system;
- Fig. 2: illustrates a flow diagram of a method for startup of a control unit for a battery system according to an embodiment;
- Fig. 3: schematically illustrates a control unit according to an embodiment; and
- Fig. 4: schematically illustrates exemplary circuit diagrams of a startup module according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art.

Accordingly, processes, elements, and techniques that are not considered necessary to those having ordinary skill in the art for a complete understanding of the aspects and features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

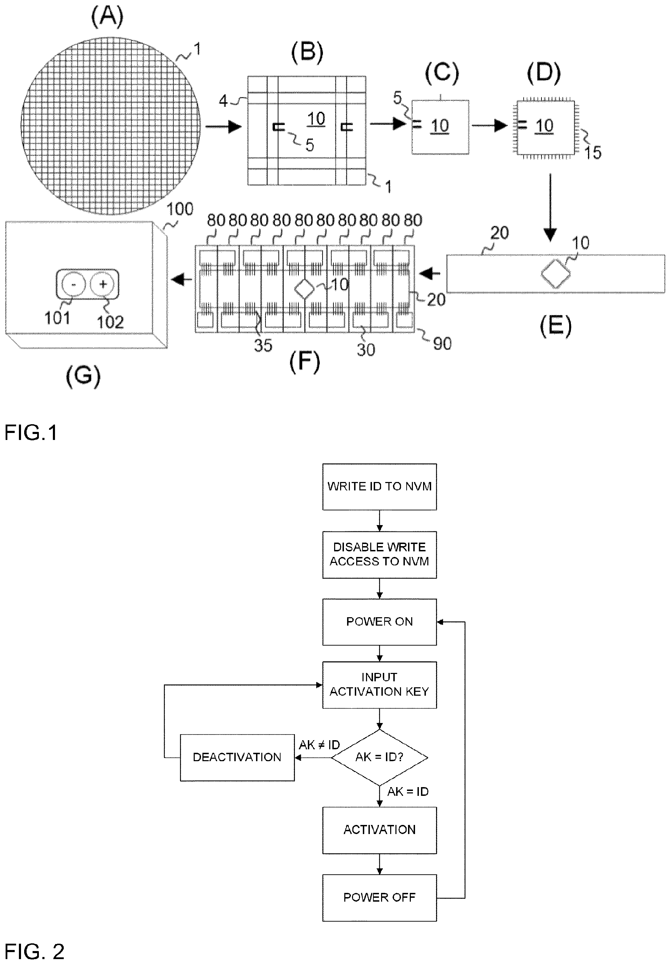

Figure 1 schematically illustrates a workflow for a production process of a battery system 100 comprising a control unit 10 according to the present invention. The production process as well as a method for startup of the control unit 10 as illustrated in Figure 2 will be described in the following.

As shown in Figure 1, a first step (A) in the production process of a battery system 100 is the manufacturing of a semiconductor control unit 10 on wafer level 1 by a semiconductor chip manufacturer. The manufacturing process on wafer level 1 comprises at least the steps of FEOL and of BEOL. During FEOL the individual devices, e.g. transistors, resistors and the like, are patterned in the semiconductor IC control units 10. During BEOL the individual devices are interconnected using a variety of metallic interconnect structures, e.g. vias.

In a second step (B) of the production process of a battery system 100, several testing procedures are performed on the individual devices and the interconnecting structures on the wafer level. In the testing procedures several electronic functions of the control unit 10 are tested, particularly with respect to at least one control function of the control unit 10. The testing might comprises voltage measurement tests, wherein predetermined voltages are measured with the control unit 10. Particularly preferred, the voltage measurement tests might comprise an offset calibration, i.e. by measuring a detected voltage if no voltage is applied to the control unit, and may further comprise a scaling calibration, i.e. by measuring a detected voltage if a predetermined voltage is applied to the control unit. The results of the measurement tests are then compared to the predetermined voltages and calibration data is derived from such comparison and saved to the control unit 10. Additionally, stress tests are performed on the control unit 10 by repeatedly performing some of its electronic functions.

Further in the second step (B), security identifiers are written to the plurality of control units 10 present on the wafer 1. Figure 1 (B) shows a detailed view of the wafer 1, wherein the area of a single control unit 10 is enclosed by dicing lines 4. The control unit 10 comprises write lines 5 for a flash memory (not shown) as non-volatile memory element of the control unit 10. For each control unit 10 an individual security identifier is written to a respective flash memory of the control unit 10 using the write lines 5. Hence, the first step of the startup method as illustrated in Figure 2 is performed in step (B) of the production process as shown in Figure 1.

In a third step (C) of the production process of battery system 100, wafer dicing occurs along dicing lines 4. Therein, the wafer 1 is segmented in order to form the individual control units 10. Further, the write lines 5 that were disposed partially within the dicing lines 4 are cut and thus, the write access to the flash memory of the control unit 10 is disabled. Hence, the second step of the startup method as illustrated in Figure 2 is usually performed in step (B) of the production process of a control unit 10 as shown in Figure 1.

In a fourth step (D) of the production process of battery system 100, the segmented control units 10 are packaged using suitable dielectrics such as epoxy, silicon or polyimide in order to protect the IC from environmental influences. Further, the control unit 10 is attached to a lead frame 15 for providing multiple electric connections to the control unit 10.

In a fifth step (E) of the workflow shown in Figure 1, the control unit 10 is assembled on a suitable circuit carrier 20, such as a printed circuit board (PCB) or flexible circuit board. Exemplarily, the control unit 10 is flip-chip mounted to the circuit carrier 20. Electric connections between the control unit 10 and the circuit carrier 20 are established by soldering, which may decrease the analogue performance of the control unit 10.

In a sixth step (F) of the workflow of Figure 1, the circuit carrier 20 comprising the control unit 10 is mounted to a plurality of secondary battery cells 80 in order to form a battery module 90. Particularly, the terminals (not shown) of each of the battery cells 80 are connected to the circuit carrier 20 via wire bonds 35. The battery cells 80 are thus connected to the control unit 10 and an operation voltage is supplied to the control unit 10 by at least one of the battery cells 80. The battery cells 80 may further be interconnected with each other via busbars 30.

By applying the operation voltage to the power input 11 of the control unit 10 during step (F) of the production process the third step of the startup method as illustrated in Figure 2 is performed. Thus, the control unit 10 enters an activation mode as the operation voltage is supplied to the power input 11 and to the startup module 12 of the of the control unit 10. In response to the operation voltage being supplied to the startup module 12, the security identifier is output from the non-volatile memory element 14. Further, the data input 15 is set up for receiving an activation key in the fourth step of the method as illustrated in Figure 2. Preferably, a user of the control unit 10, e.g. an employee of the OEM assembling the battery module 90, is prompted to insert an activation key.

After the input of the activation key, the fifth step of the startup method as illustrated in Figure 2 is performed and the input activation key is validated with respect to the security identifier. In the illustrated embodiment, the validation comprises the comparison of the activation key with the security identifier. If the validation of the activation key and the security identifier is positive, i.e. if the activation key equals the security identifier, the control unit 10 is activated, i.e. the control module 13 of the control unit 10 is activated by supplying an operation voltage to the control module 13. If the validation of the activation key is negative, i.e. if the input activation key does not equal the security identifier, the operation voltage is not supplied to the control module 13 and the control module 13 is not activated, i.e. deactivated, with respect to performing at least one control function with respect to at least one battery cell 80.

After a successful validation of the activation key with respect to the security identifier, step (G) of the production process illustrated in Figure 1 occurs. Therein, a plurality of battery modules 90 is connected to each other to form the battery system 100. Therein, the terminals (not shown) of the battery modules 90 are connected to each other using busbars (not shown). Further the CSCs 10 of the battery modules 90 are connected to each other as well as to a BMS (not shown) using a suitable communication bus, e.g. SPI or CAN. The plurality of interconnected battery modules 90 is placed in a housing 101 and a cooling circuit may be set up for cooling the battery modules 90. The plurality of battery modules 90 provides a system voltage and system current via the system terminals 102, 103.

As further illustrated in Figure 2 the control unit 10 of the invention may be turned off by depriving a power supply to the control unit 10. This might occur at the end of service life of the battery module 90 that supplies the control unit 10 or when the control unit 10 is separated from that battery module 90. If the control unit 10 is powered on again after being turned of, e.g. by connecting the control unit 10 to a replacement battery cell, the startup method starts again from the third method step as illustrated in Figure 2. In other words, the control unit 10, particularly the power input 11 and the startup module 12, again receives an operation voltage and thus enters activation mode, wherein the security identifier is output from the non-volatile memory 14 and wherein a user is prompted for inputting an activation key to the control unit 10.

The second startup of the control unit 10 proceeds in that an input activation key is validated with respect to the security identifier, i.e. that it is compared to the security identifier. If the validation of the activation key and the security identifier is positive, i.e. if the activation key equals the security identifier, the control unit 10 is activated, i.e. the control module 13 of the control unit 10 is activated by supplying an operation voltage to the control module 13. If the validation of the activation key is negative, i.e. if the input activation key does not equal the security identifier, the operation voltage is not supplied to the control module 13 and the control module 13 is not activated, i.e. deactivated, with respect to performing at least one control function with respect to at least one battery cell 80. In other words, the control unit 10 according to the invention can be powered up repeatedly, as long as a valid activation key is input to the control unit 10 at each startup of the control unit 10.

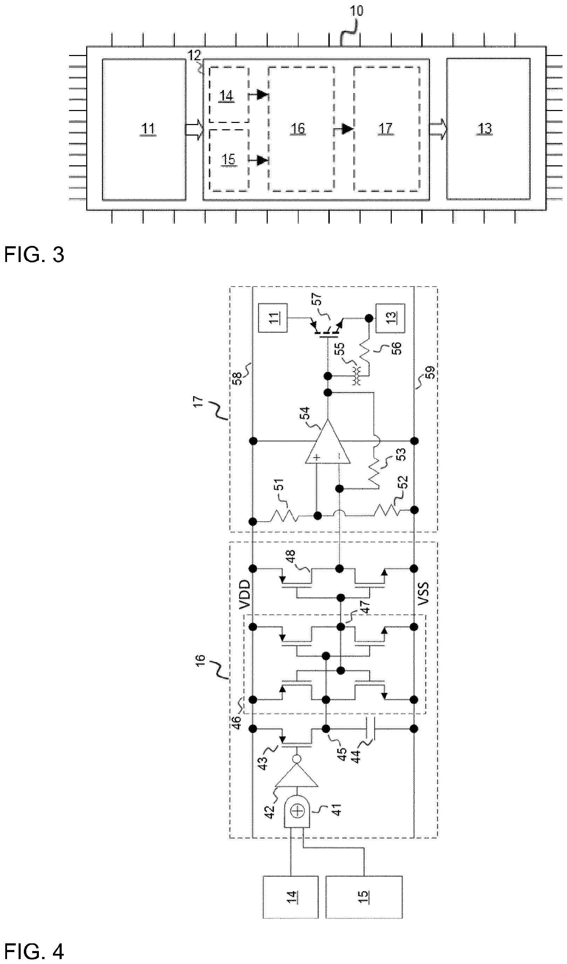

Figure 3 schematically illustrates a control unit 10 for a battery system 100 according to an embodiment. The control unit 10 comprises a power input 11 that is configured to be connected to at least one battery cell 80 for receiving an operation voltage of the control unit 10. The power input 11 preferably comprises a contact pad that is configured to be electrically connected to at least one battery cell 80, e.g. via at least one wire bond or the like.

The power input 11 is electrically connected to a control module 13 via a startup module 12. The control module 13 is configured to perform at least one control function with respect to at least one battery cell. The control functions may comprise the measurement of cell voltages, cell currents, cell resistances or cell capacities and, for a plurality of battery cell, may further comprise the active or passive balancing of cell voltages or cell currents. The control module 13 may comprise at least one contact pad (not shown) for establishing an electronic contact to at least one battery cell 80. The electronic contact may be established via a wire bond 35 that is different from the wire bond for connecting at least one battery cell 80 with the power input 11 of the control module 10.

The startup module 12 is configured for performing a startup method of the control unit 10 as described above and comprises at least a non-volatile memory element 14, data input 15, a verification circuit 16 and an activation circuit 17. The non-volatile memory element 14 and the data input 15 are connected with the verification circuit 16 and the verification circuit 16 is connected to the activation circuit 17.

The non-volatile memory element 14 is configured to safe a security identifier and to output the startup value in response to an operation voltage being applied to the startup module 12. The data input 15 is configured to receive an activation key and preferably is configured to prompt a user for inputting an activation key.

The verification circuit 16 is configured to validate an activation key input in the data input 15 with respect to a security identifier output from the non-volatile memory element 14, e.g. to compare the input activation key with an output security identifier, and to output a verification result.

The activation circuit 17 is configured to receive the verification result from the verification circuit 16 and to provide an electrical connection between the power input 11 and the control unit 13 in dependence of the verification result. The activation circuit 16 comprises at least one switch element.

Figure 4 illustrates exemplary circuit diagrams of a verification circuit 16 and an activation circuit 17 according to the present invention.

The left section of Figure 4 illustrates a schematic circuit diagram of a verification circuit 16 according to an embodiment of the invention. The verification circuit 16 comprises an XNOR gate 41 with a first input connected to a non-volatile memory element 14 and with a second input connected to a data input 15. An output of the XNOR gate 41 is connected to the input of a NOT gate 42. An output of the NOT gate 42 is connected to the input of an inverter 43 that is interconnected between a first operation line 58 that provides a first operating voltage V_{DD} and a data input of an SRAM 46. A capacitor 44 is interconnected between a second operation line 59 and the data input 45 of the SRAM 46.

The SRAM 46 comprises a first SRAM inverter and a second SRAM inverter. Each of the first SRAM inverter and the second SRAM inverter are connected to the first operation line 58 providing operation voltage V_{DD} and to the second operation voltage line 59 providing second operation voltage V_{SS}. An input node of the first SRAM inverter is electrically connected to a data input 45 of the SRAM 46. The input node 45 of the first SRAM inverter is further electrically connected to the gate of a p-channel MOSFET interconnected between the first operation line 58 and a data output 47 of the SRAM 46. The input node of the first SRAM inverter is further electrically connected to the gate of an n-channel MOSFET interconnected between the second operation line 59 and the data output 47 of the SRAM 46. The data output 47 of the SRAM 46 is electrically connected to an input node of the second SRAM inverter that is connected to the gate of a further p-channel MOSFET interconnected between the first operation line 58 and the data input 45 of the SRAM 46. The input node of the second SRAM converter is further electrically connected to the gate of a further n-channel MOSFET interconnected between the second operation line 59 and the data input 45 of the SRAM 46. The SRAM 46 is set to an operating state as soon as the first and second operation voltages are supplied to the SRAM 46. A logic value input to the data input 45 of SRAM 46 is encoded by either the first operation voltage V_{DD} ("1") or the second operation voltage V_{SS} ("0"). A logic value input to the data input 45 is inverted by the first SRAM inverter and the inverted value is supplied to the data output 47 of the SRAM 46. The inverted value is further input to the second SRAM inverter and thus reproduces the initial logic value at the data input 45. The logic value supplied to the data input 45 of the SRAM 46 is thus memorized in the SRAM 46 as long as the operation voltages are supplied.

During activation, the data input 45 of the SRAM 46 is set to logic value "0" via the capacitor 44 and thus a predetermined value is input to the SRAM 46 and a verification output of the verification circuit 16 is set to "0". If a signal, e.g. a single bit of the security identifier represented by a certain voltage, that is applied to a first input of the XNOR gate 41 equals a signal, e.g. a single bit of an input activation key represented by a certain voltage, that is applied to the second input of the XNOR gate 41, the output of the XNOR gate 41 is set to a logic value "1", e.g. represented by first operation voltage V_{DD}. The NOT gate 42 inverts the logic value and hence a logic "1" is applied to the data input 45 of the SRAM 46 by the first inverter 43. The SRAM 46 then outputs a logic value "0" that is again inverted by the second inverter 48 such that a logic value "1" is output by the verification circuit 16. The verification signal output from the verification circuit 16 thus depends on the validation result of the activation key and can be sustained at the verification output as long as the operation voltages V_{DD}, V_{SS} apply.

The right section of Figure 4 illustrates a schematic circuit diagram of an activation circuit 17 according to an embodiment of the invention. The illustrated embodiment of the verification circuit 17 comprises at least one operational amplifier 54. A first operation voltage V_{DD} is supplied to first supply input of the operational amplifier 54 by the first operation line 58 and a second operation voltage V_{SS} is supplied to a second supply input of the differential amplifier 54 by a second operation line 59. The operational amplifier 54 further comprises an inverting input ("-") and a non-inverting input ("+"). The voltage level at the output of the verification circuit 16 is supplied to the inverting input of the operational amplifier 54.

Activation circuit 17 further comprises a voltage divider with a first resistor 51 interconnected between the first operation line 58 and the non-inverting input of operational amplifier 54 and with a second resistor 52 interconnected between the second operation line 59 and the non-inverting input of the operational amplifier 54. The resistance of the first resistor 51 equals the resistance of the second resistor 52 and thus half of the first operation voltage V_{DD} is supplied to the non-inverting input of operational amplifier 54 as a reference voltage. Hence, an output of the operational amplifier 54 is set to a maximal positive voltage if a logic value "1" is applied to the output of the verification circuit 16 and is set to minimal negative voltage if a logic value "0" is applied to the output of the verification circuit 16. The output of amplifier 54 is fed back to the inverting input via a third resistor 53. Thus, the output of operational amplifier 54 is further amplified.

The activation circuit 17 further comprises an n-channel IGBT 57 as a switch element. The gate of the IGBT 57 is connected to the output of operational amplifier 54, the collector of IGBT 57 is connected to the power input 11 of the control unit 10 and the emitter of the IGBT 57 is connected to the control module 13 of control unit 10. If consistently a logic value "1" is output by the verification circuit 16, the operational amplifier 54 outputs an amplified positive voltage. Thus, IGBT 57 is set conductive and provides a conductive connection between the power input 11 and the control module 13 of control unit 10. Control unit 13 is thus enabled to perform at least one control function. Once the IGBT 57 is set conductive, the emitter of IGBT 57 is connected with the gate of IGBT 57 via a third resistor 56 and via a transformer 55. This loopback connection provides that the IGBT 57 stays conductive once it is conducting the operation voltage from the power input 10 to the control module 13 for a certain time period. The duration of the time period is thereby set by the resistance of the third resistor 56 and the inductivity of the transformer 55. The loopback circuit may comprise a further inductivity for delaying the power transport from the emitter of the IGBT 57 to the gate of the IGBT 57.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present invention.

## Claims

1. Control unit (10) for a battery system (100), comprising
a power input (11) for an operation voltage of the control unit (10) provided by at least one battery cell (80);
a control module (13) configured for performing at least one control function with respect to the at least one battery cell (80) when being supplied with an operation voltage; and
a startup module (12) connected between the power input (11) and the control module (13), wherein the startup module (12) comprises:
a data input (14) configured for receiving an activation key;
a non-volatile memory element (15) storing a security identifier;
a verification circuit (16) connected to the data input (14) and to the non-volatile memory element (15) and configured for validating an input activation key with respect to the security identifier; and
an activation circuit (17) connected to the verification circuit (16) and configured for interconnecting the power input (11) and the control module (13) for supplying the operation voltage to the control module in response to the validation of the activation key and is configured for not supplying the operation voltage to the control module if the validation of the activation key is negative.

2. Control unit (10) according to claim 1, wherein the non-volatile memory element (14) is configured for outputting the security identifier to the verification circuit (16) in response to the operation voltage being applied to the startup module (12).

3. Control unit (10) according to claim 1 or 2, wherein the control module (13) comprises means for detecting a voltage of at least one battery cell (80).

4. Control unit (10) according to any one of the preceding claims, wherein the control module (13) comprises means for balancing the voltages of a plurality of battery cells (80).

5. Control unit (10) according to any one of the preceding claims, wherein the non-volatile memory element (14) comprises at least one fusebit.

6. Control unit (10) according to any one of the preceding claims, wherein the non-volatile memory element (14) comprises at least one flash memory.

7. Control unit (10) according to any one of the preceding claims, wherein the verification circuit (16) comprises
an SRAM (46) electrically connected to a first operation line (58) providing a first operation voltage and to a second operation line (59) providing a second operation voltage;
a NOT gate (42) with an output node connected to a first inverter (43) interconnected between the first operation line (58) and a data input (45) of the SRAM (46);
a capacitor (44) interconnected between the data input (45) of the SRAM (46) and the second operation line (59); and
a second inverter (48) connected to a data output (47) of the SRAM (46).

8. Control unit (10) according to any one of the preceding claims, wherein the verification circuit (16) further comprises a XNOR gate (41) with a first input connected to the non-volatile memory element (14) and with a second input connected the to data input (15) of the startup module (12).

9. Control unit (10) according to claims 7 and 8, wherein an output of the XNOR gate (41) is connected to an input of the NOT gate (42).

10. Control unit (10) according to any one of the preceding claims, wherein the activation circuit (17) comprises
an differential amplifier (54) configured for amplifying an output of the verification circuit (16);
a switch element (57) configured for interconnecting the power input (11) and the control module (13) in response to a specific output of the differential amplifier (54).

11. Battery system (100) comprising a control circuit (10) according to any one of the preceding claims as part of at least one of a battery management system, battery monitoring unit or cell supervision circuit (10).

12. Startup method of a control unit (10) for a battery system (100), the control unit (10) comprising a power input (11) for an operation voltage provided by at least one battery cell (80); a control module (13) configured for performing at least one control function with respect to the at least one battery cell (80) when being supplied with an operation voltage; and a startup module (12) connected between the power input (11) and the control module (13), the method comprising the steps of:
(a) writing a security identifier to a non-volatile memory element (14) of the control unit (10);
(b) supplying an operation voltage of the control unit (10) to the power input (11) by at least one battery cell (80) of the battery system (100);
(c) inputting an activation key into a data input (15) of the control unit (10);
(d) validating the activation key with respect to the security identifier;
(e) interconnecting the power input (11) and the control module (13) and supplying the operation voltage to the control module in response to the validation of the activation key and not supplying the operation voltage to the control module if the validation of the activation key is negative.

13. Startup method of claim 12, further comprising the step of: disabling a write access of the non-volatile memory element (14) after step (a).

14. Startup method of claim 12 or 13, further comprising the steps of:
(f) deactivating the control unit (10) by ceasing the operation voltage supply to the power input (11);
(g) repeating the steps (b) to (e) for a repeated startup.

## Patentansprüche

1. Steuerungseinheit (10) für ein Batteriesystem (100), umfassend:
einen Stromeingang (11) für eine Betriebsspannung der Steuerungseinheit (10), die durch wenigstens eine Batteriezelle (80) bereitgestellt wird;
ein Steuerungsmodul (13), das zum Ausführen wenigstens einer Steuerungsfunktion in Bezug auf die wenigstens eine Batteriezelle (80), wenn ihm eine Betriebsspannung zugeführt wird, ausgestaltet ist; und
ein Inbetriebnahmemodul (12), das zwischen dem Stromeingang (11) und dem Steuerungsmodul (13) geschaltet ist, wobei das Inbetriebnahmemodul (12) umfasst:
einen Dateneingang (14), der zum Empfangen eines Aktivierungsschlüssels ausgestaltet ist;
ein nichtflüchtiges Speicherelement (15), das eine Sicherheitskennung speichert;
eine Verifizierungsschaltung (16), die mit dem Dateneingang (14) und mit dem nichtflüchtigen Speicherelement (15) verbunden und zum Validieren eines eingegebenen Aktivierungsschlüssels in Bezug auf die Sicherheitskennung ausgestaltet ist; und
eine Aktivierungsschaltung (17), die mit der Verifizierungsschaltung (16) verbunden und zum Miteinanderverbinden des Stromeingangs (11) und des Steuerungsmoduls (13) zum Zuführen der Betriebsspannung zu dem Steuerungsmodul in Reaktion auf die Validierung des Aktivierungsschlüssels ausgestaltet ist und zum Nichtzuführen der Betriebsspannung zu dem Steuerungsmodul, wenn die Validierung des Aktivierungsschlüssels negativ ist, ausgestaltet ist.

2. Steuerungseinheit (10) nach Anspruch 1, wobei das nichtflüchtige Speicherelement (14) zum Ausgeben der Sicherheitskennung an die Verifizierungsschaltung (16) in Reaktion darauf, dass die Betriebsspannung an dem Inbetriebnahmemodul (12) anliegt, ausgestaltet ist.

3. Steuerungseinheit (10) nach Anspruch 1 oder 2, wobei das Steuerungsmodul (13) Mittel zum Detektieren einer Spannung wenigstens einer Batteriezelle (80) umfasst.

4. Steuerungseinheit (10) nach einem der vorhergehenden Ansprüche, wobei das Steuerungsmodul (13) Mittel zum Ausgleichen der Spannungen mehrerer Batteriezellen (80) umfasst.

5. Steuerungseinheit (10) nach einem der vorhergehenden Ansprüche, wobei das nichtflüchtige Speicherelement (14) wenigstens ein Fuse-Bit umfasst.

6. Steuerungseinheit (10) nach einem der vorhergehenden Ansprüche, wobei das nichtflüchtige Speicherelement (14) wenigstens einen Flash-Speicher umfasst.

7. Steuerungseinheit (10) nach einem der vorhergehenden Ansprüche, wobei die Verifizierungsschaltung (16) umfasst:
einen SRAM (46), der elektrisch mit einer ersten Betriebsleitung (58), die eine erste Betriebsspannung bereitstellt, und einer zweiten Betriebsleitung (59), die eine zweite Betriebsspannung bereitstellt, verbunden ist;
ein NOT-Gatter (42) mit einem Ausgangsknoten, der mit einem ersten Wechselrichter (43) verbunden ist, der zwischen der ersten Betriebsleitung (58) und einem Dateneingang (45) des SRAM (46) geschaltet ist;
einen Kondensator (44), der zwischen dem Dateneingang (45) des SRAM (46) und der zweiten Betriebsleitung (59) geschaltet ist; und
einen zweiten Wechselrichter (48), der mit einem Datenausgang (47) des SRAM (46) verbunden ist.

8. Steuerungseinheit (10) nach einem der vorhergehenden Ansprüche, wobei die Verifizierungsschaltung (16) ferner ein XNOR-Gatter (41) mit einem ersten Eingang, der mit dem nichtflüchtigen Speicherelement (14) verbunden ist, und mit einem zweiten Eingang, der mit dem Dateneingang (15) des Inbetriebnahmemoduls (12) verbunden ist, umfasst.

9. Steuerungseinheit (10) nach den Ansprüchen 7 und 8, wobei ein Ausgang des XNOR-Gatters (41) mit einem Eingang des NOT-Gatters (42) verbunden ist.

10. Steuerungseinheit (10) nach einem der vorhergehenden Ansprüche, wobei die Aktivierungsschaltung (17) umfasst:
einen Differenzverstärker (54), der zum Verstärken einer Ausgabe der Verifizierungsschaltung (16) ausgestaltet ist;
ein Schalterelement (57), das zum Miteinanderverbinden des Stromeingangs (11) und des Steuerungsmoduls (13) in Reaktion auf eine spezifische Ausgabe des Differenzverstärkers (54) ausgestaltet ist.

11. Batteriesystem (100), das eine Steuerungsschaltung (10) nach einem der vorhergehenden Ansprüche als Teil wenigstens eines aus einem Batteriemanagementsystem, einer Batterieüberwachungseinheit oder einer Zellüberwachungsschaltung (10) umfasst.

12. Inbetriebnahmeverfahren einer Steuerungseinheit (10) für ein Batteriesystem (100), wobei die Steuerungseinheit (10) einen Stromeingang (11) für eine Betriebsspannung, die durch wenigstens eine Batteriezelle (80) bereitgestellt wird; ein Steuerungsmodul (13), das zum Ausführen wenigstens einer Steuerungsfunktion in Bezug auf die wenigstens eine Batteriezelle (80), wenn ihm eine Betriebsspannung zugeführt wird; und ein Inbetriebnahmemodul (12), das zwischen dem Stromeingang (11) und dem Steuerungsmodul (13) geschaltet ist, umfasst, wobei das Verfahren folgende Schritte umfasst:
(a) Schreiben einer Sicherheitskennung in ein nichtflüchtiges Speicherelement (14) der Steuerungseinheit (10);
(b) Zuführen einer Betriebsspannung der Steuerungseinheit (10) zu dem Stromeingang (11) durch wenigstens eine Batteriezelle (80) des Batteriesystems (100);
(c) Eingeben eines Aktivierungsschlüssels in einen Dateneingang (15) der Steuerungseinheit (10);
(d) Validieren des Aktivierungsschlüssels in Bezug auf die Sicherheitskennung;
(e) Miteinanderverbinden des Stromeingangs (11) und des Steuerungsmoduls (13) und Zuführen der Betriebsspannung zu dem Steuerungsmodul in Reaktion auf die Validierung des Aktivierungsschlüssels und Nichtzuführen der Betriebsspannung zu dem Steuerungsmodul, wenn die Validierung des Aktivierungsschlüssels negativ ist.

13. Inbetriebnahmeverfahren nach Anspruch 12, das ferner folgenden Schritt umfasst: Sperren eines Schreibzugriffs des nichtflüchtigen Speicherelements (14) nach Schritt (a).

14. Inbetriebnahmeverfahren nach Anspruch 12 oder 13, das ferner folgende Schritte umfasst:
(f) Deaktivieren der Steuerungseinheit (10) durch Beenden der Betriebsspannungszufuhr zu dem Stromeingang (11);
(g) Wiederholen der Schritte (b) bis (e) für eine wiederholte Inbetriebnahme.

## Revendications

1. Unité de commande (10) pour un système de batterie (100), comprenant :
une entrée de puissance (11) pour une tension de fonctionnement de l'unité de commande (10) fournie par au moins un élément de batterie (80) ;
un module de commande (13) configuré pour effectuer au moins une fonction de commande par rapport à l'au moins un élément de batterie (80) lorsqu'il est alimenté par une tension de fonctionnement ; et
un module de démarrage (12) connecté entre l'entrée de puissance (11) et le module de commande (13), où le module de démarrage (12) comprend :
une entrée de données (14) configurée pour recevoir une clé d'activation ;
un élément de mémoire non volatile (15) stockant un identifiant de sécurité ;
un circuit de vérification (16) connecté à l'entrée de données (14) et à l'élément de mémoire non volatile (15) et configuré pour valider une clé d'activation d'entrée par rapport à l'identifiant de sécurité ; et
un circuit d'activation (17) connecté au circuit de vérification (16) et configuré pour interconnecter l'entrée de puissance (11) et le module de commande (13) pour fournir la tension de fonctionnement au module de commande en réponse à la validation de la clé d'activation, et qui est configuré pour ne pas fournir la tension de fonctionnement au module de commande si la validation de la clé d'activation est négative.

2. Unité de commande (10) selon la revendication 1, dans laquelle l'élément de mémoire non volatile (14) est configuré pour délivrer en sortie l'identifiant de sécurité au circuit de vérification (16) en réponse à l'application de la tension de fonctionnement au module de démarrage (12) .

3. Unité de commande (10) selon la revendication 1 ou 2, dans laquelle le module de commande (13) comprend des moyens pour détecter une tension d'au moins un élément de batterie (80).

4. Unité de commande (10) selon l'une quelconque des revendications précédentes, dans laquelle le module de commande (13) comprend des moyens pour équilibrer les tensions d'une pluralité d'éléments de batterie (80).

5. Unité de commande (10) selon l'une quelconque des revendications précédentes, dans laquelle l'élément de mémoire non volatile (14) comprend au moins un bit fusible.

6. Unité de commande (10) selon l'une quelconque des revendications précédentes, dans laquelle l'élément de mémoire non volatile (14) comprend au moins une mémoire flash.

7. Unité de commande (10) selon l'une quelconque des revendications précédentes, dans laquelle le circuit de vérification (16) comprend :
une SRAM (mémoire vive statique) (46) connectée électriquement à une première ligne de fonctionnement (58) fournissant une première tension de fonctionnement et à une deuxième ligne de fonctionnement (59) fournissant une deuxième tension de fonctionnement ;
une porte NON (42) avec un nœud de sortie connecté à un premier onduleur (43) interconnecté entre la première ligne de fonctionnement (58) et une entrée de données (45) de la SRAM (46) ;
un condensateur (44) interconnecté entre l'entrée de données (45) de la SRAM (46) et la deuxième ligne de fonctionnement (59) ; et
un deuxième onduleur (48) connecté à une sortie de données (47) de la SRAM (46).

8. Unité de commande (10) selon l'une quelconque des revendications précédentes, dans laquelle le circuit de vérification (16) comprend en outre une porte NI exclusif (41) avec une première entrée connectée à l'élément de mémoire non volatile (14) et avec une deuxième entrée connectée à l'entrée de données (15) du module de démarrage (12) .

9. Unité de commande (10) selon les revendications 7 et 8, dans laquelle une sortie de la porte NI exclusif (41) est connectée à une entrée de la porte NON (42).

10. Unité de commande (10) selon l'une quelconque des revendications précédentes, dans laquelle le circuit d'activation (17) comprend :
un amplificateur différentiel (54) configuré pour amplifier une sortie du circuit de vérification (16) ;
un élément de commutation (57) configuré pour interconnecter l'entrée de puissance (11) et le module de commande (13) en réponse à une sortie spécifique de l'amplificateur différentiel (54).

11. Système de batterie (100) comprenant un circuit de commande (10) selon l'une quelconque des revendications précédentes, faisant partie d'au moins l'un d'un système de gestion de batterie, d'une unité de surveillance de batterie ou d'un circuit de supervision d'éléments (10).

12. Procédé de démarrage d'une unité de commande (10) pour un système de batterie (100), l'unité de commande (10) comprenant une entrée de puissance (11) pour une tension de fonctionnement fournie par au moins un élément de batterie (80) ; un module de commande (13) configuré pour effectuer au moins une fonction de commande par rapport à l'au moins un élément de batterie (80) lorsqu'il est alimenté par une tension de fonctionnement ; et un module de démarrage (12) connecté entre l'entrée de puissance (11) et le module de commande (13), le procédé comprenant les étapes consistant à :
(a) écrire un identifiant de sécurité sur un élément de mémoire non volatile (14) de l'unité de commande (10) ;
(b) fournir une tension de fonctionnement de l'unité de commande (10) à l'entrée de puissance (11) par au moins un élément de batterie (80) du système de batterie (100) ;
(c) entrer une clé d'activation dans une entrée de données (15) de l'unité de commande (10) ;
(d) valider la clé d'activation par rapport à l'identifiant de sécurité ;
(e) interconnecter l'entrée de puissance (11) et le module de commande (13) et fournir la tension de fonctionnement au module de commande en réponse à la validation de la clé d'activation et ne pas fournir la tension de fonctionnement au module de commande si la validation de la clé d'activation est négative.

13. Procédé de démarrage de la revendication 12, comprenant en outre l'étape consistant à : invalider un accès en écriture de l'élément de mémoire non volatile (14) après l'étape (a).

14. Procédé de démarrage de la revendication 12 ou 13, comprenant en outre les étapes consistant à :
(f) désactiver l'unité de commande (10) en cessant l'alimentation en tension de fonctionnement de l'entrée de puissance (11) ;
(g) répéter les étapes (b) à (e) pour un démarrage répété.
